# EUROPÄISCHE PATENTSCHRIFT

(11) **EP 0 715 876 B1**
(45) Veröffentlichungstag und Bekanntmachung des Hinweises auf die Patenterteilung: **29.08.2001**
(21) Anmeldenummer: 95109793.0
(22) Anmeldetag: 23.06.1995
(51) Int. Cl.: B01D 46/02, B01D 46/42

(54) **Taschenfilter**
Bag filter
Filtre à manche

(30) Priorität: 05.12.1994 DE 4443144
(43) Veröffentlichungstag der Anmeldung: 12.06.1996
(73) Patentinhaber: Firma Carl Freudenberg, 69469 Weinheim (DE)
(72) Erfinder: Hintenlang, Dieter, D-69518 Absteinach (DE); Unrath, Dieter, D-69469 Weinheim (DE); Michaelis, Udo, D-64331 Weiterstadt (DE); Hofmann, Margit, D-69517 Gorxheimertal (DE)

(56) Entgegenhaltungen:
- CH-A- 616 598
- DE-A- 1 407 932
- DE-U- 8 716 251
- DE-U- 9 300 732
- US-A- 4 356 011
- US-A- 5 298 044

## Beschreibung

Die Erfindung betrifft ein Taschenfilter, umfassend einen Frontrahmen, der zumindest zwei Filtertaschen außenseitig umschließt, die im Bereich der Mündung mit jeweils einem Versteifungsrahmen versehen sind, wobei die einzelnen Filtertaschen staubdicht miteinander, mit den Versteifungsrahmen und mit dem Frontrahmen verbindbar sind.

Ein solches Taschenfilter ist aus der US-PS 3,190,059 bekannt. Der Frontrahmen und die Versteifungsrahmen bestehen dabei aus Metall. Sie sind untereinander und mit den Filtertaschen durch eine gegenseitige Vernietung verbunden, was einen erheblichen Aufwand bei der Herstellung eines solchen Taschenfilters bedingt. Die Entsorgung ist sehr problematisch.

In der DE-A-1 407 932 ist eine Filterpatrone offenbart, die mehrere Filtertaschen aufweist, welche durch innerhalb angeordnete Versteifungsrahmen durch Klemmung zwischen zwei benachbarten Versteifungsrahmen bzw. Halterahmen gehalten sind. Die Rahmen sind durch Nieten miteinander verbunden, wobei das Filtermedium zwischeneinander und innerhalb des Gehäuses festgeklemmt wird.

Der Erfindung liegt die Aufgabe zugrunde, ein solches Taschenfilter derart weiterzuentwickeln, daß sich eine Vereinfachung bei der Herstellung ergibt.

Diese Aufgabe wird erfindungsgemäß bei einem Taschenfilter der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Taschenfilter ist es vorgesehen, daß der Frontrahmen an zumindest einer Umfangsstelle mit einer Durchtrennung versehen ist und eine U-förmig umlaufend ausgebildete, nach innen geöffnete Nut aufweist, in die die Versteifungsrahmen bei geöffneter Durchtrennung einfügbar sind und daß die Versteifungsrahmen so miteinander und mit der Größe des Frontrahmens abgestimmt sind, das sich beim Schließen der Durchtrennung eine staubdichte Anlageberührung zwischen allen einander benachbarten Versteifungsrahmen und der inneren Begrenzungsfläche der Nut ergibt. Der Frontrahmen kann im einfachsten Falle aus einem an vier Stellen abgewinkelten U-Profilstab bestehen, dessen Enden im Bereich der Durchtrennung zusammengefügt sind. Er weist bei einer solchen Ausbildung bereits von Hause aus eine große Eigensteifigkeit auf, die sich durch die während der bestimmungsgemäßen Verwendung unverrückbar und wackelsicher eingefügten Versteifungsrahmen weiter vergrößert. Auch bei Verwendung von Front- bzw. Versteifungsrahmen einer sehr geringen Stegstärke sind dadurch Deformierungen während der bestimmungsgemäßen Verwendung ebensowenig zu befürchten wie das Auftreten von Schwingungen als Folge von turbulenten Strömungen der zu reinigenden Luft. Unter Verwendung des erfindungsgemäßen Taschenfilters lassen sich dadurch ausgezeichnete Filtrationsleistungen erzielen. Die Versteifungsrahmen sind darüber hinaus auf den einander zugewandten Seiten mit Befestigungsmitteln versehen und sind durch die Befestigungsmittel unverrückbar miteinander in Eingriff bringbar ausgebildet sein. Die Gesamtsteifigkeit läßt sich dadurch weiter vergrößern.

Die Befestigungsmittel umfassen Vorsprünge, die in Durchbrechungen des jeweils benachbarten Versteifungsrahmens und/oder des Frontrahmens einfügbar sind. Die Vorsprünge können mit gegebenenfalls einfederbaren Rastern versehen sein, die nach dem Einfügen in die Durchbrechungen mit einer Hinterschneidung in Eingriff gelangen und die so erhaltene Verbindung weiter stabilisieren. Insbesondere in bezug auf eine dauerhafte Abdichtung der das Filtermaterial enthaltenden Zwischenzone ist das von Vorteil. Desweiteren läßt sich durch die Verwendung entsprechender Schnappverbindungen die Montage beschleunigen. Tackerverbindungen können ebenfalls zur Anwendung gelangen.

In bezug auf die Montage des erfindungsgemäßen Taschenfilters hat es sich als vorteilhaft bewährt, daß die Filtertaschen Öffnungen im Bereich ihrer Mündung aufweisen, die auf solche Vorsprünge auffädelbar sind. Hierdurch wird nicht nur die Justage der Filtertaschen in bezug auf die einzelnen Versteifungsrahmen und in bezug auf den Frontrahmen wesentlich vereinfacht sondern darüber hinaus gewährleistet, daß sich eine staubdichte Verbindung während der bestimmungsgemäßen Verbindung ergibt.

Die Versteifungsrahmen sind so dimensioniert und mit der Größe des Frontrahmens abgestimmt, dass sich beim Schließen der Durchtrennung eine staubdichte Anlageberührung zwischen allen einander benachbarten Versteifungsrahmen und der inneren Begrenzungsfläche der Nut ergibt.

Die einzelnen Versteifungsrahmen können einen einstückigen Bestandteil der Filtertaschen bilden, jedoch bedarfsweise auch separat erzeugt und nachträglich im Bereich der Mündung an den Filtertaschen festgelegt sein. Zweckmäßigerweise ist das Filtermaterial der Filtertaschen dabei auf der Außenseite der Versteifungsrahmen angeordnet. Es kann dadurch zugleich eine Dichtfunktion übernehmen, wenn solcherart von Filtermaterial umschlossene Versteifungsrahmen seitlich nebeneinanderliegend miteinander bzw. mit der Innenseite der Nut des Frontrahmens verpreßt werden. Die Dicke des Filtermaterials ist in diesem Falle bei der Dimensionierung der Versteifungsrahmen und des Frontrahmens in Abzug zu bringen unter Berücksichtigung der für die Abdichtung erforderlichen Verpressung des Filtermaterials.

Als zweckmäßig hat es sich erwiesen, wenn der Frontrahmen und/oder die Versteifungsrahmen und/oder die Filtertaschen ausschließlich aus veraschbarem Werkstoff bestehen, beispielsweise aus einem organischen und/oder polymeren Werkstoff. Hierdurch erübrigt sich nach Gebrauch eine Separierung der einzelnen Bestandteile und die gesamte Einheit kann zusammen mit den eingelagerten Staubpartikeln durch eine Verbrennung entsorgt werden.

Die Eigensteifigkeit des Taschenfilters läßt sich wesentlich vergrößern, wenn die Versteifungsrahmen in sich fachwerkartig ausgesteift sind.

Zweckmäßigerweise sind alle Versteifungsrahmen und alle Filtertaschen identisch ausgebildet. Fehlern bei der Montage wird dadurch vorgebeugt.

Der Frontrahmen kann durch Verschweißung, Verklebung, Einfügen eines Einsteck-Eckverbinders oder eine mechanische Einhakverbindung geschlossen werden. Darüber hinaus besteht die Möglichkeit, die im Bereich der Durchtrennung an aneinander anstoßenden Enden mittels eines einfachen Klebebandes zu verbinden und/oder eine eventuelle Trennfuge zu überdecken und dabei abzudichten. Klebebänder sind nicht nur kostengünstig verfügbar sondern darüber hinaus veraschbar. Ihre Anbringung und Entfernung ist ganz besonders einfach. Durch die Verwendung von Einsteck-Eckverbindern, zweckmäßig gelangen diese an allen vier Ecken zur Anwendung, läßt sich eine besonders gute Diagonalsteifigkeit erzielen. Diese ist wichtig in bezug auf die Vereinfachung des Einbaus.

Das erfindungsgemäße Taschenfilter besteht im einfachsten Falle nur aus drei Komponenten, nämlich dem Frontrahmen, einer Standardfiltertasche und einem Standardversteifungsrahmen. Diese Komponenten können nach Belieben und handwerklich sehr einfach zu dem gebrauchsfertigen Taschenfiltern zusammengefügt und gegebenenfalls separiert werden. Hierdurch besteht auch die Möglichkeit, die einzelnen Filtertaschen nach eingetretenem Verbrauch bedarfsweise durch neue Filtertaschen zu ersetzen. Dadurch wird nicht nur der Verbrauch an Neuteilen gesenkt sondern darüber hinaus ein erhebliches Transportvolumen eingespart.

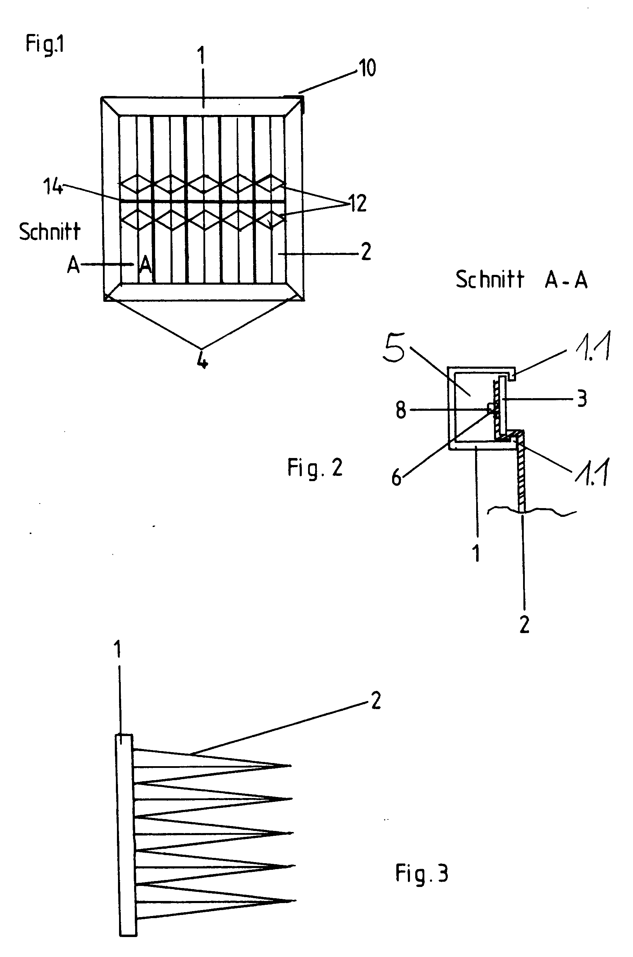

Die Erfindung wird nachfolgend anhand der Zeichnung weiter verdeutlicht. Es zeigen:
- Fig. 1: ein Taschenfilter in einer Ansicht von vorn.
- Fig. 2: den Rahmenbereich des Taschenfilters gemäß Fig. 1 in quergeschnittener Darstellung.
- Fig. 3: das Taschenfilter gemäß Fig. 1 in einer Ansicht von oben.
- Fig. 4: eine Filtertasche der in dem Taschenfilter gemäß Fig. 1 enthaltenen Art.
- Fig. 5: ein Versteifungsrahmen, der in den Filtertaschen gezeigten Filters gemäß Fig. 1 enthaltenen Art.

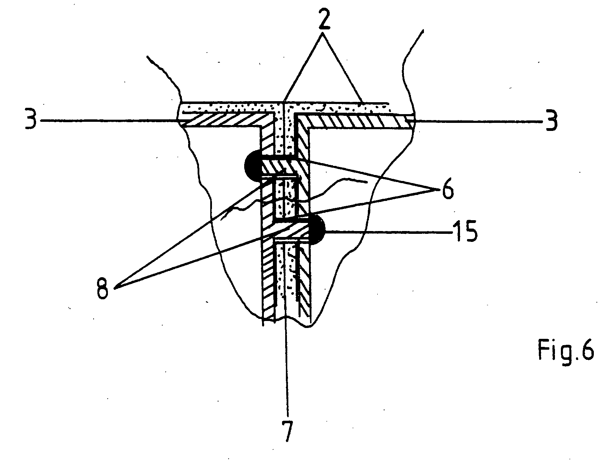

- Fig. 6: einen vergrößerten Ausschnitt aus einem stirnseitigen Bereich des Taschenfilters
Das in den Fig. 1 und 3 gezeigte Taschenfilter umfaßt einen Frontrahmen 1, der die Mündungen von fünf Filtertaschen 2 außenseitig umschließt. Die Filtertaschen 2 sind im Bereich der Mündung mit jeweils einem Versteifungsrahmen 3 versehen, der in die jeweilige Mündung eingefügt ist. Die die Versteifungsrahmen auf diese Weise außenseitig umschließenden Filtermatten können eine hohe Eigenelastizität haben. Sie werden beim Zusammenfügen zwischen den benachbarten Versteifungsrahmen 3 sowie zwischen den Versteifungsrahmen 3 und dem Frontrahmen 1 staubdicht verpreßt.

Der Frontrahmen 1 besteht aus einem an vier Stellen in Richtung der Nut abgewinkelten U-Profilstab aus Polypropylen, dessen Enden nach dem Einfügen der die Filtertaschen 2 tragenden Versteifungsrahmen 3 im Bereich der Durchtrennung 4 durch ein Klebeband 10 dauerhaft verbunden sind. In seine nach innen geöffnete, umlaufenden Nut 5 sind somit in der gebrauchsfertigen Einheit nebeneinanderliegend fünf Versteifungsrahmen 3 eingefügt, die ihrerseits außenseitig von den Mündungen der einzelnen Filtertaschen 2 umschlossen und durch das die Filtertaschen bildende Filtermaterial gegeneinander und gegenüber dem Frontrahmen abgedichtet sind. Bedarfsweise kann die Anzahl der Filtertaschen geändert sein und mehr oder weniger Einheiten umfassen.

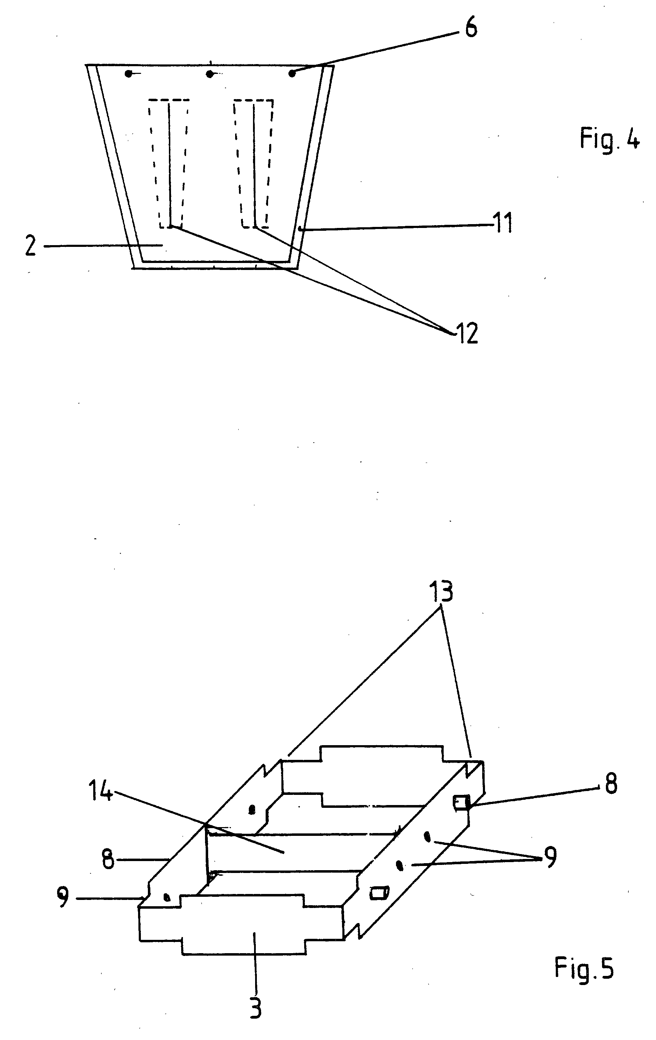

Eine beispielhafte Ausführung einer solchen Filtertasche wird die Fig. 4 in zusammengelegtem Zustand gezeigt. Sie besteht aus zwei aufeinandergeschichteten Filtermattenzuschnitten von trapezförmigem Umriß, die einen Gehalt eines thermoplastisch erweichbaren Werkstoffes aufweisen und im Bereich eines kontinuierlich ineinanderübergehenden Randstreifens 11 unlösbar verschweißt , genäht oder verklebt sind. Durch den Randstreifen 11 wird zusätzlich eine Versteifungszone gebildet, die den einzelnen Filtertaschen bei einer senkrechten Anordnung in einem Filteraggregat selbsttragende Eigenschaften zu verleihen vermag.

Im Zwischenraum der beiden Filtermatten sind hohlkegelig ausgebildete Distanzelemente angeordnet, die im Bereich der einander gegenüberliegenden Filtermatten mit diesen verschweißt oder verklebt sind. Die Distanzelemente 12 blähen sich während der bestimmungsgemäßen Verwendung unter dem Druck der zu reinigenden Luft auf und werden dabei in eine sehr formbeständige Gestalt überführt. Flatterbewegungen der Filtermatten während der bestimmungsgemäßen Verwendung werden dadurch weitestgehend unterdrückt, was das Auftreten von Staubdurchbrüchen weitgehend unterbindet.

Im Bereich ihrer Mündung ist die Filtertasche 2 mit Öffnungen 6 versehen und dadurch auf Vorsprünge 8 der Versteifungsrahmen 3 auffädelbar und in bezug auf diesen präzise positionierbar. Die einander gegenüberliegenden Längsseiten der Versteifungsrahmen 3 sind durch eine Fachwerkaussteifung 14 aufeinander abgestützt. Aus Vereinfachungsgründen wurde in Fig. 5 diesbezüglich nur ein einziger, sich senkrecht zu den Längsseiten erstreckender Steg gezeigt. Schräg verlaufende Stege sind möglich und können die Diagonalsteifigkeit wesentlich verbessern.

Nach dem Auffädeln der einzelnen Filtertaschen gemäß Fig. 4 auf die einzelnen Versteifungsrahmen gemäß Fig. 5 werden die so gebildeten Einheiten entsprechend Fig. 1 bis 3 nebeneinanderliegend zusammengefügt, wobei die Vorsprünge 8 einander benachbarter Versteifungsrahmen 3 deren Durchbrechungen 9 und zugleich die Öffnungen 6 der Filtertaschen 2 durchdringen. Die einzelnen Filtertaschen 2 werden dadurch nicht nur in präziser Weise in bezug auf die jeweils zugehörigen Versteifungsrahmen positioniert sondern zusätzlich in bezug auf die gesamte, so gebildete Einheit. Diese wird anschließend in das U-förmig nach innen geöffnete Profil des Frontrahmens 1 eingefügt, der aus einem an vier Stellen abgewinkelten U-Profilstab besteht, dessen Enden im Bereich der Durchtrennung 4 zusammengefügt und durch einen auf der Außenseite übergeklebten Klebestreifen 10 unverrückbar verbunden sind. Die so gebildete Einheit ist unmittelbar verwendungsfähig.

In Fig. 2 wird die sich ergebende Verformung des Filtermaterials im Bereich der Randeinspannung des Frontrahmens 1 gezeigt. Es wird deutlich, daß das Filtermaterial der Filtertaschen 2 im Bereich der Versteifungsrahmen 3 mehrfach umgelegt, senkrecht zu seiner Dicke verpreßt und zusätzlich durch den Druck der während der bestimmungsgemäßen Verwendung durchströmenden Luft an den Frontrahmen 1 angedrückt wird. Dessen Profil ist im Bereich der Mündung der nach innen offenen Nut 5 durch zwei einander zugewandte Stege 1.1 verengt auf einen Wert, der kleiner ist als die Breite B des Versteifungsrahmens 3. Dieser muß daher zum Einfügen um seine Achse elastisch verdreht werden und ist zu diesem Zweck im Bereich der Ecken mit ein- oder beidseitigen Ausklinkungen 13 versehen (Fig. 5). Nach dem Einfügen nimmt der Versteifungsrahmen aufgrund seiner Eigenelastizität seine ursprüngliche Form gemäß Fig. 5 wieder an. Er wird dadurch in der Nut 5 zusätzlich fixiert, was ein Herausfallen oder die Entstehung undichter Verbindungen zu den Filtertaschen verhindert und mit einer zusätzlichen Sicherung gleichzusetzen ist. Die solcherart erreichte Festlegung kann dadurch als besonders zuverlässig und dauerhaft bezeichnet werden.

Der Versteifungsrahmen 3 kann ebenfalls aus einem polymeren Werkstoff bestehen, beispielsweise aus Polypropylen. In diesem Falle besteht die Möglichkeit, die Vorsprünge 8 (Fig. 5) nach dem Aneinanderfügen der einzelnen, Versteifungsrahmen 3 enthaltenen Filtertaschen 2 auf der jeweils gegenüberliegenden Seite durch thermisches Verschmelzen mit einer Verdickung 15 zu versehen und auf diese Weise die einzelnen Filterelemente unverrückbar aneinander festzulegen. Zwischen den einander benachbarten Versteifungsrahmen 3 sind dann jeweils zwei aufeinanderliegende Schichten 7 des Filtermaterials vorhanden, die miteinander verpreßt sind und eine gute Abdichtung bewirken. Staub vermag dadurch auch in dieser Zone das Taschenfilter nicht zu passieren.

Das erfindungsgemäße Taschenfilter kann vollständig aus veraschbaren Materialien bestehen, beispielsweise aus organischen und/oder polymeren Substanzen. Nach eingetretenem Gebrauch ist dadurch eine Entsorgung auf dem Wege der Verbrennung möglich.

## Patentansprüche

1. Taschenfilter, umfassend einen Frontrahmen (1), der zumindest zwei Filtertaschen (2) außenseitig umschließt, die im Bereich der Mündung mit jeweils einem Versteifungsrahmen (3) versehen sind, wobei die einzelnen Filtertaschen (2) staubdicht miteinander, mit den Versteifungsrahmen (3) und mit dem Frontrahmen (1 ) verbindbar sind, der Frontrahmen (1) an zumindest einer Umfangsstelle mit einer Durchtrennung (4) versehen ist und eine U-förmig umlaufend ausgebildete, nach innen geöffnete Nut (5) mit im Bereich der Mündung einander zugewandt angeordneten Stegen (1.1) aufweist und wobei die Versteifungsrahmen (3) so dimensioniert und mit der Größe des Frontrahmens (1) abgestimmt sind, daß sich beim Schließen der Durchtrennung (4) eine staubdichte Anlageberührung zwischen allen einander benachbarten Versteifungsrahmen (3) und der innerern Begrenzungsfläche der Nut (5) ergibt , **dadurch gekennzeichnet, daß** die Versteifungsrahmen (3) im Bereich ihrer Ecken Ausklinkungen (13) aufweisen und bei geöffneter Durchtrennung (4) in die Nut (5) hinter die Stege (1.1) eingefügt sind, dass die Versteifungsrahmen zum Zweck des Einfügens um ihre Achse elastisch verdrehbar sind und aufgrund der Eigenelastizität nach dem Einfügen ihre ursprüngliche Form wieder annehmen, daß die Versteifungsrahmen (3) auf den einander zugewandten Seiten mit Befestigungsmitteln versehen und durch die Befestigungsmittel unverrückbar miteinander in Eingriff bringbar sind und daß die Befestigungsmittel Vorsprünge (8) umfassen, die in Durchbrechungen (9) des jeweils benachbarten Versteifungsrahmens (3) und/oder Frontrahmens (1) einfügbar sind, wobei die Filtertaschen (2) im Bereich ihrer Mündung Öffnungen (6) aufweisen, die auf die Vorsprünge (8) auffädelbar sind.

2. Taschenfilter nach Anspruch 1, **dadurch gekennzeichnet**, daß der Frontrahmen (1) aus einem an vier Stellen abgewinkelten U-Profilstab besteht, dessen Enden, im Bereich der Durchtrennung (4) zusammengefügt sind.

3. Taschenfilter nach Anspruch 1 oder 2, **dadurch gekennzeichnet**, daß die Durchtrennung (4) durch eine dauerhafte Verbindung geschlossen ist.

4. Taschenfilter nach einem der Ansprüche 1 bis 3, **dadurch gekennzeichnet**, daß der Frontrahmen (1 ) und/oder die Versteifungsrahmen (3) und/oder die Filtertaschen (2) ausschließlich aus veraschbarem Werkstoff bestehen.

5. Taschenfilter nach einem der Ansprüche 1 bis 4, **dadurch gekennzeichnet**, daß alle Versteifungsrahmen (3) identisch ausgebildet sind.

## Claims

1. A bag filter, comprising a front frame (1) which surrounds on the outside at least two filter bags (2) which are provided in the region of the mouth with a reinforcing frame (3) in each case, the individual filter bags (2) being connectable in a dust-proof manner to one another, to the reinforcing frames (3) and to the front frame (1), the front frame (1) being provided at at least one circumferential point with a separation (4) and having an inwardly open groove (5) designed to run around in a U-shaped manner and having webs (1.1) arranged so as to face one another in the region of the mouth, and the reinforcing frame (3) being dimensioned and coordinated with the size of the front frame (1) in such a way that, when the separation (4) is closed, dust-proof bearing contact occurs between all the reinforcing frames (3) adjacent to one another and the inner boundary surface of the groove (5), **characterized in that** the reinforcing frames (3) have notches (13) in the region of their corners and, with the separation (4) open, are inserted into the groove (5) behind the webs (1.1), in that, for the purpose of insertion, the reinforcing frames are elastically twistable about their axis and, by virtue of the inherent elasticity, resume their original shape after being inserted, in that the reinforcing frames (3) are provided on the sides facing one another with fastening means and are capable of being brought immovably into engagement with one another by the fastening means, and in that the fastening means comprise projections (8) which are capable of being inserted into perforations (9) of the respectively adjacent reinforcing frame (3) and/or front frame (1), the filter pockets (2) having in the region of their mouth orifices (6) which are capable of being slipped onto the projections (8).

2. A bag filter according to claim 1, **characterized in that** the front frame (1) consists of a U-profile bar which is angled at four points and the ends of which are joined together in the region of the separation (4).

3. A bag filter according to claim 1 or 2, **characterized in that** the separation (4) is closed by means of a permanent connection.

4. A bag filter according to any one of claims 1 to 3, **characterized in that** the front frame (1) and/or the reinforcing frames (3) and/or the filter bags (2) consist solely of incineratable material.

5. A bag filter according to any one of claims 1 to 4, **characterized in that** all the reinforcing frames (3) are designed identically.

## Revendications

1. Filtre à poche comprenant un cadre avant (1) qui entoure du côté externe au moins deux poches de filtre (2) qui sont dotés dans la zone de l'embouchure à chaque fois d'un cadre de renforcement (3), les différents filtres à poche (2) pouvant être reliés ensemble en étant étanches aux poussières, avec les cadres de renforcement (3) et avec le cadre avant (1), le cadre avant (1) étant doté d'une séparation (4) à au moins un point de la circonférence et présente une rainure (5) conçue en tournant en forme de U et ouverte vers l'intérieur avec des entretoises (1.1) disposées en étant orientées l'une vers l'autre dans la zone de l'embouchure et dans lequel les cadres de renforcement (3) sont dimensionnés et assortis à la grandeur du cadre avant (1) de manière telle qu'il résulte, lors de la fermeture de la séparation (4), un contact de structure étanche aux poussières entre tous les cadres de renforcement (3) contigus les uns aux autres et la surface de limitation interne de la rainure (5), **caractérisé en ce que** les cadres de renforcement (3) présentent des encoches (13) dans la zone de leurs angles et sont insérés, lorsque la séparation (4) est ouverte, dans la rainure (5) derrière les entretoises (1.1), en ce que les cadres de renforcement peuvent être tordus de façon élastique autour de leur axe aux fins d'insertion et reprennent leur forme d'origine après l'insertion en raison de l'élasticité propre, en ce que les cadres de renforcement (3) sont dotés de moyens de fixation sur les côtés orientés les uns vers les autres et peuvent être mis en prise ensemble sans pouvoir être déplacés par les moyens de fixation et en ce que les moyens de fixation comprennent des saillies (8) qui peuvent être insérées dans des découpures (9) du cadre de renforcement (3) à chaque fois contigu et / ou du cadre avant (1), les poches de filtre (2) présentant des ouvertures (6) dans la zone de leur embouchure, lesquelles peuvent être enfilées sur les saillies (8).

2. Filtre à poche selon la revendication 1, **caractérisé en ce que** le cadre avant (1) se compose d'une moulure de profil en U coudée en quatre endroits, dont les extrémités sont réunies dans la zone de la séparation (4).

3. Filtre à poche selon la revendication 1 ou 2, **caractérisé en ce que** la séparation (4) est fermée par une liaison permanente.

4. Filtre à poche selon l'une des revendications 1 à 3, **caractérisé en ce que** le cadre avant (1) et / ou les cadres de renforcement (3) et / ou les poches de filtre (2) sont composés exclusivement de matière première pouvant être incinérée.

5. Filtre à poche selon l'une des revendications 1 à 4, **caractérisé en ce que** tous les cadres de renforcement (3) sont conçus de façon identique.
